(19) Europäisches Patentamt
European Patent Office
Office européen des brevets

(11) **EP 0 777 951 B1**

(12) **EUROPEAN PATENT SPECIFICATION**

(45) Date of publication and mention
of the grant of the patent:
**03.11.2004  Bulletin 2004/45**

(51) Int Cl.$^7$: **H04Q 7/38**

(21) Application number: **95930765.3**

(22) Date of filing: **28.08.1995**

(86) International application number:
**PCT/SE1995/000966**

(87) International publication number:
**WO 1996/008119 (14.03.1996 Gazette 1996/12)**

(54) **METHOD AND DEVICE AT CELLULAR TELECOMMUNICATION SYSTEM**

VERFAHREN UND EINRICHTUNG FÜR ZELLULARE TELEKOMMUNIKATIONSSYSTEME

PROCEDE ET DISPOSITIF POUR SYSTEME DE TELECOMMUNICATIONS CELLULAIRE

(84) Designated Contracting States:
**CH DE DK ES FR GB LI NL**

(30) Priority: **31.08.1994  SE 9402886**

(43) Date of publication of application:
**11.06.1997   Bulletin 1997/24**

(73) Proprietor: **TELIA AB**
**123 86 Farsta (SE)**

(72) Inventors:
• **WALTER, Patrik**
  **S-227 30 Lund (SE)**

• **ANDERSSON, Torbjörn**
  **S-223 61 Lund (SE)**

(74) Representative: **Hopfgarten, Nils**
**L.A. Groth & Co. KB**
**P.O. Box 6107**
**102 32 Stockholm (SE)**

(56) References cited:
**EP-A- 0 566 548        WO-A-91/17608**
**GB-A- 2 214 750**

# Description

## TECHNICAL FIELD

The present invention relates to a method for predicting future pilot strengths for use for evaluating a mobile's active set in a cellular telecommunication system operating with macro diversity, said prediction being based on previously measured pilot strengths.

The invention also relates to a cellular telecommunication system of the above mentioned kind, including predictors for predicting future pilot strengths, as stated above.

## STATE OF THE TECHNOLOGY

In PCT-application WO 91/17609 a method to predict future measurement values for handoff-decisions is described. According to the application, measurements are performed of for instance the signal strength on a transmission. To make possible to make handoff-decisions at an early stage, a prediction of the signal strength is performed. The connection situation is adaptively predicted in the system by means of previously obtained data or parameters. An adaptive filter is then used. According to the application the mobile can perform measurements on surrounding base stations or vice versa.

American patent 4 556 760 describes the use of a handoff-filter in a cellular mobile telephone system. The patent describes a filter function, which is usable for evaluating for instance amplitude variations at a mobile unit, which is moving in the neighbourhood of a cell border.

The filter function offers both long and short averaging of the received signal. These averages can be used together with the latest measured value to predict future values.

The American patent 5 267 261 describes a mobile assisted "soft" handoff in a cellular communication system using CDMA. The described method, which is also called base station diversity, implies that communication between mobiles can be made over a number of base stations at the same time. Maintaining of active setting is included in the method. Nothing, however, is mentioned about prediction.

In PCT-application WO 92/12602 is indicated how handover in mobile radio system is to be performed. The mobile unit measures the strength of signals from surrounding base stations, and bases the handover decision on the basis of increase or decrease of the mentioned signal strengths.

The European patent application 462 952 describes adjustment of the output in a digital mobile telephone system to keep the transmitted power on optimal level, i.e. low enough not to disturb, but high enough to be received at the receiver. The adjustment decision is based on predicted future signal strength values, which in their turn are calculated from previously measured values, for instance signal strength, signal quality, which are averaged.

In American patent 5 203 010 is shown a cellular radio telephone system. In this system the base station measures the signal strength of the signal from the mobile unit and calculates a future value, which it then communicates to surrounding base stations.

## DESCRIPTION OF THE INVENTION

### TECHNICAL PROBLEM

In CDMA-systems it is comparatively easy to implement macro diversity. Therefore this exists as a natural part in Qualcoms CDMA-system and in the CODIT-project's (RACE II) system concept and test system. Macro diversity means in this connection that a mobile can be connected to more than one base at the same time to keep up a connection. In order to use as much as possible of total received payload signal (from different base stations in the downlink, in the uplink a number of base stations receive the same signal) different combination methods are then used both on mobile- and network side. Normally, if macro diversity is used, a mobile in the border area of a cell is always connected to more than one base station. In this way, among other things, a more secure handover is obtained, so-called soft handovers, higher quality of transmission in border areas and generally more secure connections in border areas.

A central concept in the connection is "the mobile station active set". The mobile's active set defines which base stations the mobile at present are connected to. The function "the active set update function" evaluates continuously the mobile's active set and decides about connections and disconnections, if any, i.e. all changes of the mobile's active set. The decisions are based on pilot measurements (each base station has a unique pilot channel with known, often constant and equal output). Which algorithm is used for deciding about changes of the mobile's active set is unimportant in this connection, as long as the evaluation is based on the pilot measurements.

In principle the aim is to keep the strongest base stations in the mobile's active set. Strongest implies in this connection those bases, which experience the smallest attenuation (the sum of the distance attenuation and the slow fading, rapid fading is filtered away). In this way power is saved and by that capacity. Consequently optimally a mobile in macro diversity only uses the links, which at present have the smallest propagation losses (the rapid fading disregarded).

To achieve the above, the mobile detects and measures continuously the strongest pilots. The rapid fading is filtered away, in CODIT median filters are used for this, the values are after that collected to a measurement report. Measurement reports are sent at a certain pace to system management, where the mobile's active set is evaluated (thus the report goes to the active set update function). In CODIT a second filtering is made before the measurement values are used, but how the filtering is managed is unimportant for the invention. The problem is that measurement values, which are used for the evaluation of the mobile's active set, are "old", the total time between measurement point of time and point of time for a resulting change of the mobile's active set can be 1 - 2 seconds or more. This is due to delays in the measurement process itself, in the filtering, in the reporting and in delays at signalling and transmission of data, and in the connection of a new base (synchronization).

The delay brings about increased interference level, lager variation of received signal/noise relation (i. e. lower quality) and increased power consumption. Generally can be said that a CDMA-system with macro diversity (and power adjustment in up- and downlink) is comparatively sensible to delays of this kind. Optimally would be to know the pilot strengths in the future, during the time that an active set shall be valid. This is also in principle what the invention is aiming at. Even if the description here is based on a CDMA-system with macro diversity based on pilot strength measurements, the formulation of the problem is more general. The problem exists in all mobile systems with macro diversity (according to the definition which has been made here), where the macro diversity is controlled by means of measurements, which are correlated with the sum of the distance attenuation and the long fading between base and mobile. (These two quantities are in the general case much correlated in up- and downlink). It is assumed that it is not possible to design a system without delays.

There is always a risk that a predictor becomes instable during one or a few samples. Different predictors are more or less robust, often depending on how it is implemented even if the same mathematical algorithm is used. Beside building in stabilisation criteria in the predictor itself, which requires comparatively much additional work, there are always parameters which control the inertia in the adaption process. A correct balance often gives a stable solution.

The purpose of the present invention is to propose a method for securing stability by using the knowledge about the measurement signal and to provide a cellular telecommunication system utilizing this technique.

## THE SOLUTION

This purpose is obtained by a method and a cellular telecommunication system of the kind defined in the introductory portion of the description and having the characterizing features of claims 1 and 6 respectively.

## DESCRIPTION OF FIGURES

The invention will be described in the following while at the same time references are made to enclosed drawings where:

**Figure 1** in curve form shows pilot strength after filtering away of rapid fading, at which measurement values and future measurement values are indicated on the curve, and T represents a measurement reporting period.

**Figure 2** in the form of block diagram shows an adaptive active connection prediction, where the memory processing is not shown but central processing of the measurement values are assumed, at which the system is digital/discrete and is shifted at the same pace as the measurement values: arrive, and measured pilot strength is the value after filtering away of rapid fading.

## DETAILED DESCRIPTION

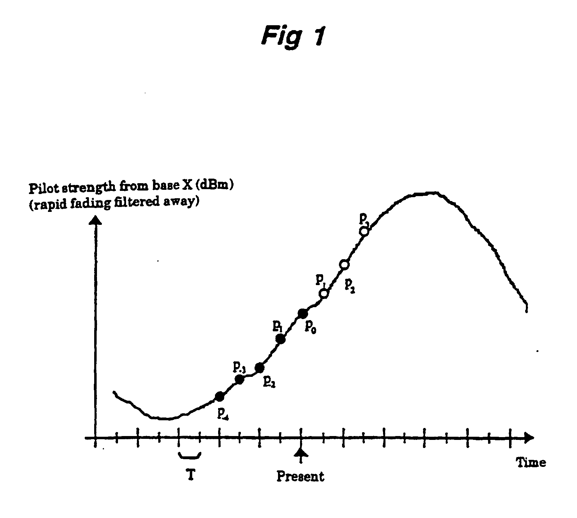

The invention is based on the fact that the slow fading is predictable, at least during the time intervals, i.e. one or a few seconds, which is of interest here. The same also applies in principle to the distance attenuation during the mentioned time interval, because the pattern of movement of a vehicle does no change instantaneously, a car does not turn 180° at 70 km/hour. A walking user, on the other hand, is not possible to predict, but in this case the distance attenuation is neither considerably changed during studied time interval. Thus, instead of basing the evaluation of the mobile's active set on the latest batch of received measurement values (after filtering), i.e. only on the information in the latest received measurement report, previously received reports are also used to estimate the situation in an immediate future (i.e. one or a few seconds later). Two fundamental strategies are suggested, see Figure 1, for the strongest pilots:

**A**. Predict the pilot strength one or more periods of time (i.e. measurement reporting periods, in the interval 0,25 - 2,0 seconds) ahead in time. Base the evaluation on these predicted values. Thus make use of available measurement values $p_0$ up to and including $p_{-k}$, k>0, for predicting $p_1$. Use a one step- or multistep predictor. At multistep prediction either a true multistep predictor can be realised, or a one step predictor, which is iterated, can be used. More about predictors follows.

**B.** Predict the time average of the pilot strength a number of time periods ahead in the time. Base the evaluation on these predicted values. Two variants are possible, to predict separate pilot. strength values and calculate the time average, or to predict the time average directly. Accordingly use available measurement values $p_0$ up to and including $p_{-k}$, $k>0$, for predicting for instance $p_1/2+p_2+p_3/2)/T$, where T is the reporting period which is known.

Both methods thus require one (the case in strategy A and possible in strategy B) or more predictors (can be the case in strategy B) per pilot, which is detected in the mobile. This calls for memory capacity and calculating capacity. This should not cause any problems in the future generations of mobile systems. Possible predictors follow. Furthermore functions are needed to secure the stability. Finally are needed functions for automatic connection and disconnection of the predictors, which will also be discussed. The latter are needed because it is probably pointless (with the time interval and the measurement reporting periods which are discussed here) to predict in indoor environment.

Three possible embodiments of predictors are suggested:

**1.** If one restrict oneself to linear predictors, an RLS-predictor (Recursive Least Squares) is the best choice. RLS-predictors are possible to analyse (will however take some time in the general case) and are comparatively easy to implement. We skip the mathematical description here and establish that there exist robust methods with reasonable calculation- and memory consumption. By using an RLS-algorithm one can obtain BLUE (Best Linear Unbiased Estimation). Consequently it is not possible to construct a better linear average true predictor with lower fault variance (the fault is the difference between predicted and real value). There may however be (there are in most cases) predictors, which are not linear or not average true with lower variance on the fault.

**2**. A more sophisticated method is to use a neural network as predictor. Neural predictors are considerably more difficult to analyse (a complete analysis on a larger predictor can be an impossibility, which can be proved). In any case good results can be obtained even if the preparations are considerably more extensive. It is in most cases possible to get compact and robust, not necessarily linear or average true, predictors by using neural networks. The field is a science in itself.

**3**. A third method which is neither quite uncomplicated, is to use an ML-predictor (Maximum Likelihood). The method is based on measurement from distributions which are at least partly known and which definitely is the case here. The slow fading is approximatively lognormal, the measurement faults are possible to estimate and the distance attenuation is dependent on the movement pattern of the mobile. As the movement pattern is possible to analyze, an approximate distribution can be obtained. It can be shown that ML-predictors which are linear (which is not a demand) can reach BLUE.

There is always a risk that a predictor becomes instable during one or a few samples. Different predictors are more or less robust, often depending on how it is implemented even if the same mathematical algorithm is used. Beside building in stabilisation criteria in the predictor itself, which requires comparatively much additional work, there are always parameters which control the inertia in the adaption process. A correct balance often gives a stable solution. A completing method, to secure the stability, which is suggested here is to use the knowledge about the measurement signal.

According to the present invention a technique is proposed for securing stability by using knowledge about the measurement signal. The difference between two consecutive measurement values, $\Delta_m$, is then continuously measured, possibly with a gliding window. A quantity $\Delta_t$ is determined so that the probability $P(|\Delta_m| <\Delta_t ) = 95\%$ (for instance) within the interval, i.e. the probability that $|\Delta_m|$ is below $\Delta_t$ is 95% within the interval. A more simple variant is of course to use a fixed $\Delta_t$, the value of which is decided by previous measurements and considering the measurement report period.

The difference between two consecutive predicted values, $\Delta_p$, is further measured continuously and if $|\Delta_p|$ exceeds $\Delta_t$, then restrict the output value, i.e. the predicted value, from the predictor so this is not the case any longer.

The method has for almost obvious reasons a very stabilizing effect, especially at multistep prediction where one iterates up a one step predictor. If the threshold value is not set too low, the goodness of the predictor will not be influenced of any note. This method can be used at initial simulations.

When predictors are used it is always possible to check the goodness in previous predictions. This by comparing previous predicted values with measurement values. This gives an opportunity to disconnect the predictor if the prediction faults become too large. In certain surroundings it can be difficult to predict future values, in these cases it is better to disconnect the predictor and use the measurement values directly.

A simple method is to continuously compare with the fault in an imagined predictor, which uses the latest measurement value as a predicted value (in other words no prediction at all). If the prediction faults at a mobile thus are too large, according to the above, during a certain time period, the predictors will be coupled by, and the measurements values will be used directly.

When the fault rate decreases, the predicted values will be used again. The analogy with selection diversity is not altogether misleading. This method is not used at initial simulations.

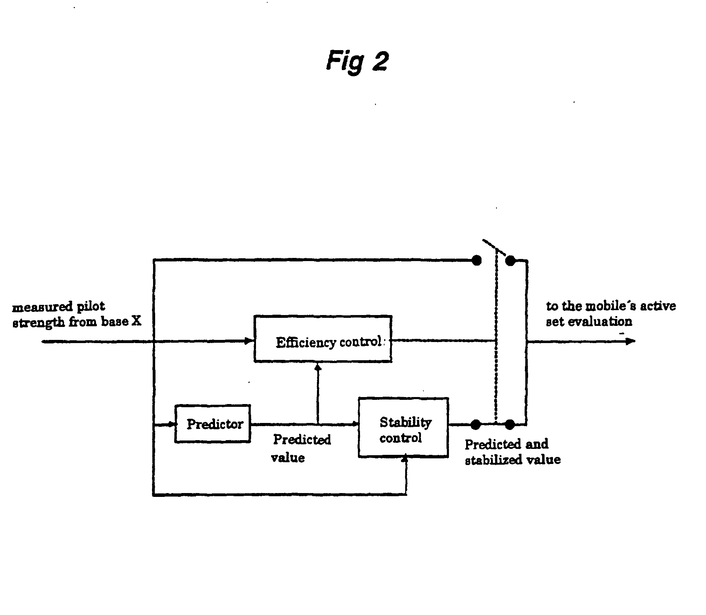

The foundation stones of the invention are the predictor, the stability control and the efficiency control, schematically shown in Figure 2. Before this there is the measurement process itself and the filtering for elimination of rapid fading. After there is the evaluation routine, which decides if, and in that case how, the mobile's active set shall be changed. A known evaluation routine, which is produced within CODIT, exists. A similar routine is used in Qualcom's system.

The invention can be used in mobile CDMA-system with macro diversity with the meaning which is indicated here. The invention can be directly realised in the CODIT system. More generally the product can be used in the mobile systems of the third generation, if the macro diversity is implemented and a suitable measurement channel is available (shall be correlated to the slow fading on up- and downlink and of course the distance attenuation). Demands are also made on the measurement intensity, calculation and memory capacity. There is, however, no demand that the measurements shall be performed at the mobile even if this will simplify the use. The invention is possible to implement by means of measurements on the network side instead. The invention is usable in systems where an increased importance is attached to, by means of measurements and measurement value processing, increase the capacity and the transmission quality.

The different parts individually, possibly with exception of the efficiency control, are built on in itself known technology. The total system and the field of use is however new. Known alternative methods (CODIT and Qualcom) are low pass filtering of the measurement values. The interference level can be lowered in both up- and downlink, and the quality of up- respective downlink can be increased. The gains are expected to be higher after a more exact design, trimming and analysis.

The invention is used foremost in mobile CDMA radio systems and might also be used in modern TDMA-systems, for instance of the type DECT. The invention can also be used for the mobile radio systems of the third generation, compare UMTS/FPLMTS, which probably will be CDMA-based. By the invention is achieved higher quality of the radio transmission, higher capacity, a smaller number of base stations, which in its turn leads to cheaper installation, more satisfied users, which in its turn give obvious competition advantages.

**Claims**

1. Method for predicting future pilot strengths for use for evaluating a mobile's active set in a cellular telecommunication system operating with macro diversity, said prediction being based on previously measured pilot strengths, **characterized in that** to secure stability of the prediction the difference $\Delta_m$ between two measured consecutive pilot strength values is continuously measured, and by using the knowledge about the measured pilot strength signal

a quantity $\Delta_t$ is determined such that

$$P(|\Delta_m| < \Delta_t) = 95\%$$

where $P(|\Delta_m| < \Delta_t)$ denotes the probability for the inequality $|\Delta_m| < \Delta_t$ to be valid, and **in that** the difference $\Delta_p$ between two consecutive predicted pilot strength values is continuously measured and compared with the quantity $\Delta_t$, and if the inequality

$$|\Delta_p| > \Delta_t$$

is valid, the output value, i.e. the predicted value, from the predictor is restricted so this is not the case any longer.

2. Method according to claim 1, **characterized in that** the prediction is performed one or a few seconds ahead in the time.

3. Method according to claim 2, **characterized in that** the pilot strength is predicted one or more time periods in an interval between 0,25-2,0 seconds ahead in the time.

4. Method according to claims 2 or 3, **characterized in that** the time average of the pilot strength is predicted a number of time periods ahead in time, whereupon the evaluation of a mobile's active set, is based on these predicted values, separate pilot strength values being predicted and the time average being calculated in dependence of this prediction, or the time average being directly predicted.

5. Method according to any of the preceding claims, **characterized in that** the goodness in the previous predictions is controlled by comparison of previously predicted values with measurement values and a predictor is disconnected if the prediction faults become too large.

6. A cellular telecommunication system operating with macro diversity, said system including predictors for predicting future pilot strengths for use for evaluating the active set of mobiles in the system, said predictors being adapted to base predictions on previously measured pilot strengths, **characterized in that** to secure stability of the prediction said predictors are adapted to continuously form the difference $\Delta_m$ between two measured consecutive pilot strength values, and use the knowledge about the measured pilot strength signal to determine a quantity $\Delta_t$ such that

$$P(|\Delta_m| < \Delta_t) = 95\%$$

where $P(|\Delta_m| < \Delta_t)$ denotes the probability for the inequality $|\Delta_m| < \Delta_t$ to be valid, said predictors also being adapted to continuously form the difference $\Delta_p$ between two consecutive predicted pilot strength values and compare the difference $\Delta_p$ with the quantity $\Delta_t$ to restrict the output values, i.e. predicted values from the predictors if the inequality

$$|\Delta_p| > \Delta_t$$

is satisfied, so this is not the case any longer.

7. System according to claim 6, **characterized by** a one step- or a multistep predictor, in the case of multistep predictor said predictor being a true multistep predictor, and in the case of a one step predictor said predictor being adapted for iteration.

8. System according to claims 6 or 7, **characterized in that** one or more predictors are provided per pilot and **in that** the mobiles include memory and calculation means for detection of the pilot.

9. System according to any of claims 6 - 8, **characterized in that** devices are arranged for automatic connection and disconnection of the predictors.

10. System according to any of claims 6 - 9, **characterized in that** said predictors include linear predictors, which consist of RLS-predictors operating with an RLS-algorithm.

11. System according to any of claims 6 -10, **characterized in that** as predictor is used a neural network.

12. System according to any of claims 6 -11, **characterized in that** said predictors include ML-predictors operating with measurement values which are obtained from distributions which are at least partly known.

13. System according to any of claims 7-12, **characterized by** central memory processing for the prediction and stability control.

**Patentansprüche**

1. Verfahren zum Vorhersagen zukünftiger Pilotsignalstärken zur Verwendung bei der Bewertung der aktiven Gruppe eines Mobilfunkgeräts in einem zellularen Telekommunikationssystem mit Makro-Diversity, wobei die Vorhersage auf vorher gemessenen Pilotsignalstärken beruht, **dadurch gekennzeichnet, dass** zur Sicherstellung von Stabilität der Vorhersage, die Differenz $\Delta_m$ zwischen zwei ge-

messenen aufeinanderfolgenden Pilotsignalstärkewerten fortlaufend gemessen wird und durch Anwendung der Kenntnis über die gemessene Pilotsignalstärke eine Größe $\Delta_t$ so bestimmt wird, dass

$$P(|\Delta_m| < \Delta_t) = 95\%$$

wobei $P(|\Delta_m| < \Delta_t)$ die Wahrscheinlichkeit bezeichnet, dass die Ungleichheit $|\Delta_m| < \Delta_t$ gültig ist, und dass die Differenz $\Delta_p$ zwischen zwei aufeinanderfolgenden vorhergesagten Pilotsignalstärkewerten fortlaufend gemessen und mit der Menge $\Delta_t$ verglichen wird und wenn die Ungleichheit

$$|\Delta_p| > \Delta_t$$

gültig ist, der Ausgangswert, d.h. der vorhergesagte Wert, aus dem Prädiktor eingeschränkt wird, so dass dies nicht mehr der Fall ist.

2. Verfahren nach Anspruch 1, **dadurch gekennzeichnet, dass** die Vorhersage zeitlich eine oder einige Sekunden im voraus durchgeführt wird.

3. Verfahren nach Anspruch 2, **dadurch gekennzeichnet, dass** die Pilotsignalstärke zeitlich eine oder mehrere Zeitperioden in einem Intervall zwischen 0,25-2,0 Sekunden im voraus vorhergesagt wird.

4. Verfahren nach Anspruch 2 oder 3, **dadurch gekennzeichnet, dass** der zeitliche Mittelwert der Pilotsignalstärke zeitlich eine Anzahl von Zeitperioden im voraus vorhergesagt wird, woraufhin die Bewertung einer aktiven Gruppe eines Mobilfunkgeräts auf diesen vorhergesagten Werten beruht, wobei getrennte Pilotsignalstärkewerte vorhergesagt und der zeitliche Mittelwert in Abhängigkeit von dieser Vorhersage berechnet oder der zeitliche Mittelwert direkt vorhergesagt wird.

5. Verfahren nach einem der vorhergehenden Ansprüche, **dadurch gekennzeichnet, dass** die Güte in den vorhergehenden Vorhersagen durch Vergleich der vorher vorhergesagten Werte mit Messwerten gesteuert und ein Prädiktor abgetrennt wird, wenn die Vorhersagefehler zu groß werden.

6. Zellulares Telekommunikationssystem mit Makro-Diversity, wobei dieses System Prädiktoren zur Vorhersage von zukünftigen Pilotsignalstärken zur Verwendung zur Bewertung der aktiven Gruppe von Mobilfunkgeräten im System enthält, wobei die Prädiktoren Vorhersagen auf vorher gemessenen Pilotsignalstärken basieren können, **dadurch gekennzeichnet, dass** zur Sicherstellung von Stabilität der Vorhersage die Prädiktoren fortlaufend die Differenz $\Delta_m$ zwischen zwei gemessenen aufeinanderfolgenden Pilotsignalstärkewerten bilden können, und die Kenntnis über das gemessene Pilotsignalstärkesignal zur Bestimmung einer Größe $\Delta_t$ benutzen, so dass

$$P(|\Delta_m| < \Delta_t) = 95\%$$

wobei $P(|\Delta_m| < \Delta_t)$ die Wahrscheinlichkeit bezeichnet, dass die Ungleichheit $|\Delta_m| < \Delta_t$ gültig ist, wobei diese Prädiktoren auch fortlaufend die Differenz $\Delta_p$ zwischen zwei aufeinanderfolgenden vorhergesagten Pilotsignalstärkewerten bilden und die Differenz $\Delta_p$ mit der Größe $\Delta_t$ vergleichen können, um die Ausgangswerte, d.h. vorhergesagten Werte aus den Prädiktoren einzuschränken, wenn die Ungleichheit

$$|\Delta_p| > \Delta_t$$

erfüllt ist, so dass dies nicht länger der Fall ist.

**7.** System nach Anspruch 6, **gekennzeichnet durch** einen Einschritt- oder Mehrschrittprädiktor, wobei im Fall des Mehrschrittprädiktors der Prädiktor ein echter Mehrschrittprädiktor ist und im Fall eines Einschrittprädiktors der Prädiktor zur Wiederholung geeignet ist.

**8.** System nach Ansprüchen 6 oder 7, **dadurch gekennzeichnet, dass** pro Pilotsignal ein oder mehrere Prädiktoren bereitgestellt sind und dass die Mobilfunkgeräte Speicherund Berechnungsmittel zur Erkennung des Pilotsignals enthalten.

**9.** System nach einem der Ansprüche 6 - 8, **dadurch gekennzeichnet, dass** Vorrichtungen zur automatischen Verbindung und Abtrennung der Prädiktoren angeordnet sind.

**10.** System nach einem der Ansprüche 6 - 9, **dadurch gekennzeichnet, dass** die Prädiktoren lineare Prädiktoren enthalten, die aus mit einem RLS-Algorithmus arbeitenden RLS-Prädiktoren bestehen.

**11.** System nach einem der Ansprüche 6 - 10, **dadurch gekennzeichnet, dass** ein Neuronennetz als Prädiktor benutzt wird.

**12.** System nach einem der Ansprüche 6 - 11, **dadurch gekennzeichnet, dass** die Prädiktoren ML-Prädiktoren umfassen, die mit Messwerten arbeiten, die aus zumindest teilweise bekannten Verteilungen erhalten werden.

**13.** System nach einem der Ansprüche 7 - 12, **gekennzeichnet durch** zentrale Speicherverarbeitung für die Vorhersage und Stabilitätssteuerung.

## Revendications

**1.** Procédé de prédiction des forces de canal pilote futures, utilisable pour l'évaluation d'un ensemble actif d'un mobile dans un système de télécommunication cellulaire fonctionnant avec macro diversité, la dite prédiction étant basée sur des forces de pilote précédemment mesurées, **caractérisé en ce que**, pour assurer la stabilité de la prédiction, on mesure de façon continue la différence $\Delta_m$ entre deux valeurs de force de pilote mesurées consécutives et, par utilisation de la connaissance relative au signal de force de pilote mesuré, on détermine une quantité $\Delta_t$ de sorte que

$$P\,(|\Delta_m| < \Delta_t) = 95\%$$

où $P\,(|\Delta_m| < \Delta_t)$ désigne la probabilité que l'inégalité $|\Delta_m| < \Delta_t$ soit satisfaite, et **en ce que** la différence $\Delta_p$ entre deux valeurs de force de pilote prédites consécutives est continuellement mesurée et comparée à la quantité $\Delta_t$ et, si l'inégalité

$$|\Delta_p| > \Delta_t$$

est satisfaite, la valeur de sortie, c'est-à-dire la valeur prédite, du prédicteur est limitée de sorte que cela ne soit plus le cas.

**2.** Procédé selon la revendication 1, **caractérisé en ce que** la prédiction est effectuée une ou quelques secondes plus tôt dans le temps.

**3.** Procédé selon la revendication 2, **caractérisé en ce que** la force du pilote est prédite une ou plusieurs périodes de temps dans un intervalle entre 0,25 et 2,0 secondes plus tôt dans le temps.

**4.** Procédé selon la revendication 2 ou 3, **caractérisé en ce que** la moyenne temporelle de la force de pilote est prédite un certain nombre de périodes de temps plus tôt dans le temps, après quoi l'évaluation d'un ensemble actif de mobile est basée sur ces valeurs prédites, des valeurs de force de pilote séparées étant prédites et la moyenne temporelle étant calculée en fonction de cette prédiction, ou bien la moyenne temporelle étant prédite directement.

**5.** Procédé selon une quelconque des revendications précédentes, **caractérisé en ce que** la qualité des prédictions précédentes est contrôlée par comparaison des valeurs précédemment prédites avec des valeurs mesurées, et un prédicteur est déconnecté si les défauts de prédiction deviennent trop grands.

6. Système de télécommunication cellulaire fonctionnant avec macro diversité, le dit système comprenant des prédicteurs pour prédire des forces de canal pilote futures, utilisables pour évaluer l'ensemble actif de mobiles dans le système, les dits prédicteurs étant conçus pour baser les prédictions sur des forces de pilote précédemment mesurées, **caractérisé en ce que**, pour assurer la stabilité de la prédiction, les dits prédicteurs sont prévus pour former continuellement la différence $\Delta_m$ entre deux valeurs de force de pilote mesurées consécutives, et utilisent la connaissance au sujet du signal de force de pilote mesurée pour déterminer une quantité $\Delta_t$ telle que

$$P\left(|\Delta_m|<\Delta_t\right) = 95\%$$

où $P\left(|\Delta_m|<\Delta_t\right)$ désigne la probabilité que l'inégalité $\left(|\Delta_m|<\Delta_t\right)$ soit satisfaite, les dits prédicteurs étant également prévus pour former continuellement la différence $\Delta_p$ entre deux valeurs de force de pilote prédites consécutives et comparer la différence $\Delta_p$ avec la quantité $\Delta_t$ pour limiter les valeurs de sortie, c'est-à-dire les valeurs prédites des prédicteurs si l'inégalité $|\Delta_p|>\Delta_t$ est satisfaite , de sorte que cela ne soit plus le cas.

7. Système selon la revendication 6, **caractérisé par** un prédicteur à une seule étape ou à étapes multiples, le dit prédicteur étant, dans le cas d'un prédicteur à étapes multiples, un prédicteur à étapes multiples véritable, et le dit prédicteur, dans le cas d'un prédicteur à étape unique, étant prévu pour itération.

8. Système selon la revendication 6 ou 7, **caractérisé en ce qu'**il est prévu un ou plusieurs prédicteurs par canal pilote et **en ce que** les mobiles comprennent une mémoire et des moyens de calcul pour la détection du pilote.

9. Système selon une quelconque des revendications 6 à 8, **caractérisé en ce que** des dispositifs sont prévus pour connexion et déconnexion automatiques des prédicteurs.

10. Système selon une quelconque des revendications 6 à 9, **caractérisé en ce que** les dits prédicteurs comprennent des prédicteurs linéaires qui consistent en prédicteurs RLS fonctionnant avec un algorithme RLS.

11. Système selon une quelconque des revendications 6 à 10, **caractérisé en ce qu'**on utilise un réseau neural comme prédicteur.

12. Système selon une quelconque des revendications 6 à 11, **caractérisé en ce que** les dits prédicteurs comprennent des prédicteurs ML fonctionnant avec des valeurs de mesure qui sont obtenues à partir de distributions qui sont au moins en partie connues.

13. Système selon une quelconque des revendications 7 à 12, **caractérisé par** un traitement de mémoire centrale pour la commande de prédiction et de stabilité.

## Fig 1

EP 0 777 951 B1

# Fig 2

measured pilot
strength from base X

Efficiency control

Predictor

Predicted
value

Stability
control

Predicted and
stabilized value

to the mobile´s active
set evaluation

10